# EUROPEAN PATENT SPECIFICATION

(11) **EP 0 638 836 B1**
(45) Date of publication and mention of the grant of the patent: **04.06.1997**
(21) Application number: 94112410.9
(22) Date of filing: 09.08.1994
(51) Int. Cl.: G02F 1/31, H04B 10/213

(54) **Wavelength selective optical switch**
Wellenlängenselektiver optischer Schalter
Commutateur optique sélectif en longueur d'onde

(30) Priority: 10.08.1993 IT TO930601
(43) Date of publication of application: 15.02.1995
(73) Proprietor: CSELT Centro Studi e Laboratori Telecomunicazioni S.p.A., I-10148 Turin (IT)
(72) Inventor: Calvani, Riccardo, Pino Torinese (Torino) (IT); Vezzoni, Emilio, Torino (IT)
(74) Representative: Riederer Freiherr von Paar zu Schönau, Anton

(56) References cited:
- EP-A- 0 361 368
- ELECTRONICS LETTERS, vol.29, no.10, 13 May 1993, Stevenage, GB, pp 905-907, XP 000367666; M. FUKUTOKU ET AL.: 'Wavelength-division-multiplexing add/drop multiplexer employing a novel polarisation independent acousto-optic tunable filter'
- IEEE PHOTONICS TECHNOLOGY LETTERS, vol.5, no.7, July 1993, New York, US, pp 825-828, XP000394492; K. ODA ET AL.: 'An Optical FDM-Add/Drop Multiplexing Ring Network Utilizing Fiber Fabry-Perot Filters and Optical Circulators'
- CONFERENCE ON OPTICAL FIBER COMMUNICATION / INTERNATIONAL CONFERENCE ON INTEGRATED OPTICS AND OPTICAL FIBER COMMUNICATION '93 TECHNICAL DIGEST, vol. 4, 21 February 1993-26 February 1993, San Jose, CA, US, PAPER TUH4, pp 33-34; M. KAWACHI ET AL.: 'Silica-based optical-matrix switch with intersecting Mach-Zehnder waveguides for larger fabrication tolerances'
- TRANSACTIONS OF THE INSTITUTE OF ELECTRONICS AND COMMUNICATION ENGINEERS OF JAPAN, SECTION E, vol.E72, no.10, October 1989, Tokyo, JP, pp 1086-1088, XP000074437; MASAFUMI KOGA ET AL.: 'MULTI/DEMULTIPLEXER USING A 4-PORT OPTICAL CIRCULATOR AND INTERFERENCE FILTERS'

## Description

The present invention relates to optical switching devices and more particularly it concerns a two-by-two, wavelength selective optical switch.

Wavelength selective optical switches can be used for example in routing nodes of a wavelength division multiplex network, i. e., a network in which information associated to various communications or groups of communications modulates separate carriers spaced apart by tens of nanometres to tenths of nanometre, depending on the requirements and the technologies used. For such applications, wavelength selectivity is necessary, so that the various carriers can be routed along different paths. Independence from polarisation is also desirable, so that polarisation state control systems need not be introduced and attenuation will not vary with the polarisation state. On the other hand, the switching speed need not be very high, response times of the order of some milliseconds being sufficient.

A polarisation independent switching element particularly suited for low switching speed applications is described by A. C. Boucouvalas and G. Georgiou in the paper "Fibre-optic interferometric tunable switch using the thermo-optic effect", Electronics Letters, Vol. 21, No. 11, May 23, 1985. The switch consists in an optical fibre Mach- Zehnder interferometre, in which the optical length of one of the two branches can be varied through a heating electrode applied to a thin film connected to the fibre in the branch. By applying adequate voltages to the electrode, the power associated to an optical input signal is split as desired between the two outputs.

Thermo-optical switches based on the same principle can be used to form switching matrices with several inputs and outputs, as described in the paper "Silica-based optical- matrix switch with intersecting Mach-Zehnder waveguides for larger fabrication tolerances" by M. Kawachi et alii, Conference OFC/IOOC '93, 21-26 February 1993, San José, California, (U.S.A.), paper TuH4.

The behaviour of thermo-optical switches, however, is substantially independent from wavelength. Therefore, they must be coupled to optical bandpass filters for wavelength selective routing.

A wavelength-division-multiplexing add-drop multiplexer employing an acousto-optical tunable filter between two optical circulators providing first and second inputs/outputs is described in Electronics Letters, Vol. 29, No. 10, 12-5-93, pages 905 to 907, in an article by M. Fukutoku et al. The filter being an acousto-optical polarization converter, makes the device rather complex, without satisfactory wavelength-selectivity and with the possibility of polarization-selective attenuations, so that it is not suitable as an optical switch as desired.

The lack of selectivity is also typical of waveguide switches using electro-optical effects or semiconductor amplifiers as optical ports; moreover, also such switches are markedly polarisation dependent.

With this invention, on the contrary, a highly selective switch is provided that can also be used in wavelength-division multiplex transmission systems having very closely spaced channels.

The switch according to the invention includes:
- a first three-port optical circulator, with an input port and an output port respectively being a first input and a first output of the switch;
- a second three-port optical circulator, with an input port and an output port respectively being a second input and a second output of the switch; and
- a wavelength-tunable optical bandpass filter, connected between an input-output port of the first circulator and an input-output port of the second circulator, and associated with a tuning means, with reference to a given wavelength, and is characterized in that said filter is a resonant cavity optical fibre filter, and the tuning means are arranged to adjust the cavity length for varying the filter tuning and switching it between a first state, in which it transmits said given wavelength, and a second state, in which it reflects said given wavelength, and viceversa, so that a carrier at that wavelength arriving at the input port of one of the circulators is transferred to the output port of the same circulator in a straight state or to the output port of the other circulator in a crossed state.

Advantageously, the means for switching the state of the filter are capable of setting it to the crossed state for a given selectable wavelength in a wavelength-division multiplex present at the inputs, and to the straight state for all other wavelenghts in the multiplex

The present invention will be made clearer with reference to the annexed drawing, in which:
- Figure 1 is a diagram of the optical switch according to the invention; and
- Figure 2 is a diagram the electro-optical characteristic of the switch.

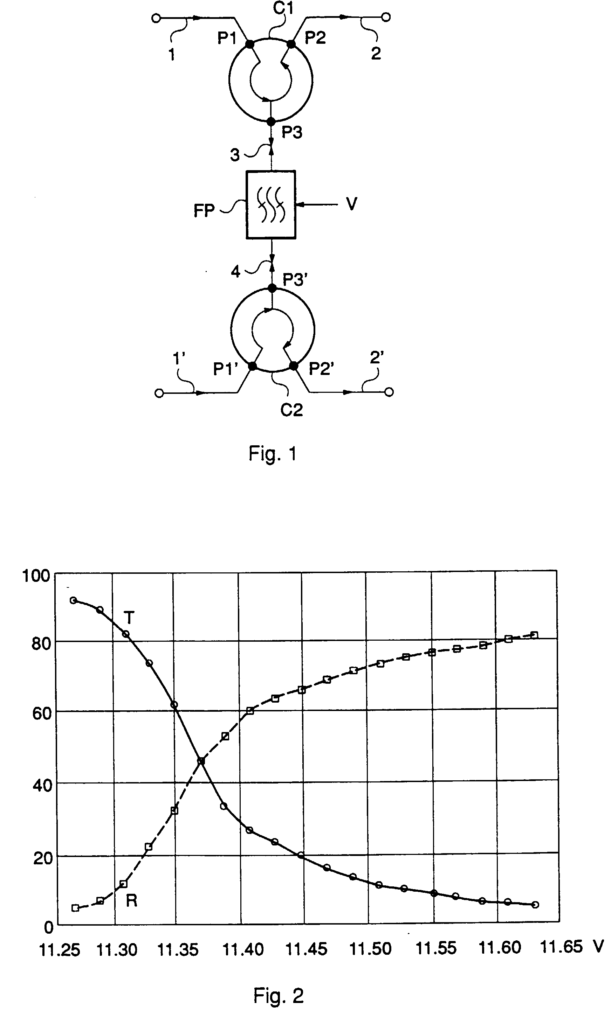

As it can be seen from Figure 1, the device has a pair of circulators, C1 and C2, implemented in micro-optics, and a bandpass filter, FP, connected between the two circulators.

Circulators C1, C2 are three-port devices having a one-way input port, a one-way output port and a two-way input-output port. Input ports P1, P1' are the two inputs of the switch, and are respectively connected to input lines 1, 1'; output ports P2, P2' are the two outputs of the switch, and are respectively connected to output lines 2, 2'. Ports P3, P3' are respectively connected to fibres 3, 4 transferring signals from circulators C1, C2 to filter FP and viceversa.

The bandpass filter FP must have high wavelength selectivity and low attenuation and must be capable of transmitting the wavelength corresponding to the passband and reflecting all others. For example, the filter FP can be a Fabry-Perot cavity resonator, in which one of the mirrors is arranged at the termination of one of the fibres 3, 4, and the other on the surface of an element associated to the other fibre, said element having a size comparable to that of the cavity and practically the same refraction index as the fibre core. A voltage-controlled piezo-electric device allows shifting the element so as to vary the cavity length and thus the filter passband. The structure of a tunable Fabry-Perot filter is described for instance in the paper "A field-worthy, high performance tunable fiber Fabry- Perot filter", submitted at the Conference ECOC '90, 16-20 September 1990, Amsterdam. The control voltage V of the piezo-electric device is supplied by a source capable of generating several voltage levels, each of which corresponds to a passband centered around one of the wavelengths present on input lines 1, 1'.

Both the optical circulators and the tunable Fabry-Perot cavity filter are commercially available components.

The device works as follows. For simplicity, only one of the device inputs is considered, say, input 1, on which a certain set of wavelengths, λ₁, λ₂...λₙ, is available, and it is assumed that at a given time routing operations concern the carrier at wavelength λᵢ. Depending on whether this carrier should be routed to output line 2' or 2, the control voltage V to be applied to the piezo-electric device of the filter FP must be centered on wavelength λᵢ or on a different wavelength. In the first case, the Fabry-Perot cavity of the filter is transparent to a radiation at that wavelength, and carrier λᵢ passes from input 1 to output 2' through ports P1, P3 of circulator C1, fibre 3, filter FP, fibre 4 and ports P3', P2' of C2 (crossed state of the switch). In the second case, the radiation is reflected from FP along fibre 3 and leaves to output 2 through ports P3, P2 of C1 (straight state of the switch).

Figure 2 shows the characteristic of a switch according to the invention for λᵢ = 1548,45 nm. In the diagram, curve T depicts the percent power outgoing from port P2' versus the voltage applied to filter FP, and curve R depicts the corresponding percent power outgoing from port P2. From these curves it appears that the crossed state is obtained for V= 11,25 V; if the voltage is increased to 11,65 V, the straight state is obtained in turn.

At the moment considered, the switch also presents the same straight or crossed state for a carrier at wavelength λᵢ that may be present at input 1': this carrier will then leave through output 2 (along the path: ports P1', P3' of C2, fibre 4, FP, fibre 3, ports P3, P2 of C1) if the voltage applied is the tuning voltage of the filter, whereas otherwise it will be reflected by FP towards port P3' of C2 and will reach output 2' through port P2'.

The carrier to be routed can be selected by appropriately varying the voltage V. Generally, for a given voltage, the device will be in the crossed state exclusively for a possible carrier which the filter

## Claims

1. Two-input, two-output optical switch, including:
- a first three-port optical circulator (C1) with an input port (P1) and an output port (P2) respectively being a first input and a first output of the switch;
- a second three-port optical circulator (C2) with an input port (P'1) and an output port (P'2) respectively being a second input and a second output of the switch; and
- a wavelength-tunable optical bandpass filter (FP) connected between an input-output port (P3) of the first circulator and an input-output port (P'3) of the second circulator, and associated with a tuning means, with reference to a given wavelength;
characterized in that said filter (FP) is a resonant cavity optical fibre filter, and the tuning means are arranged to adjust the cavity length for varying the filter tuning and switching it between a first state, in which it transmits said given wavelength, and a second state, in which it reflects said given wavelength, and viceversa. so that a carrier at that wavelength arriving at the input port of one of the circulators (C1, C2) is transferred to the output port of the same circulator in a straight state or to the output port of the other circulator in a crossed state.

2. Switch according to claim 1, characterized in that the means for switching the state of the filter (FP) are capable of setting it to the crossed state for a given selectable wavelength in a wavelength-division multiplex present at the inputs, and to the straight state for all other wavelengths in the multiplex.

3. Switch according to claim 1 or 2, characterized in that said filter (FP) is controlled by a variable voltage source, for state switching and wavelength tuning.

4. Switch according to any preceding claim, characterized in that it is connected together with several identical elements so as to form a n-input, n-output matrix.

5. Routing node for a wavelength-division multiplex optical communications network, including a switching matrix implemented with switches according to any preceding claim.

## Patentansprüche

1. Optischer Schalter mit zwei Eingängen und zwei Ausgängen, umfassend:
- einen ersten dreipoligen optischen Zirkulator (C1) mit einem Eingangsanschluß (P1) und einem Ausgangsanschluß (P2), die ein erster Eingang bzw. ein erster Ausgang des Schalters sind;
- einen zweiten dreipoligen optischen Zirkulator (C2) mit einem Eingangsanschluß (P'1) und einem Ausgangsanschluß (P'2), die ein zweiter Eingang bzw. ein zweiter Ausgang des Schalters sind; und
- ein hinsichtlich der Wellenlänge abstimmbares optisches Bandpaßfilter (FP), das zwischen einen Eingangs-Ausgangs-Anschluß (P3) des ersten Zirkulators und einen Eingangs-Ausgangs-Anschluß (P'3) des zweiten Zirkulators eingeschaltet ist und dem eine Einrichtung zum Abstimmen mit Bezug auf eine gegebene Wellenlänge zugeordnet ist;
dadurch gekennzeichnet, daß das Filter (FP) ein Lichtleitfaserfilter mit Resonanzkavität ist, und die Einrichtung zum Abstimmen für das Justieren der Kavitätslänge zwecks Änderung der Filterabstimmung und für das Schalten des Filters zwischen einem ersten Zustand, in dem es die gegebene Wellenlänge durchläßt, und einem zweiten Zustand, in dem es die gegebene Wellenlänge reflektiert, und umgekehrt, ausgebildet ist, so daß ein am Eingangsanschluß eines der Zirkulatoren (C1, C2) eintreffender Träger mit dieser Wellenlänge zum Ausgangsanschluß des selben Zirkulators in einem geraden Zustand oder zum Ausgangsanschluß des anderen Zirkulators in einem überkreuzten Zustand übertragen wird.

2. Schalter nach Anspruch 1, dadurch gekennzeichnet, daß die Einrichtung für das Schalten des Zustands des Filters (FP) dieses für eine gegebene wählbare Wellenlänge eines an seinen Eingängen vorhandenen wellenlängen-geteilten Multiplexes in den überkreuzten Zustand und für alle anderen Wellenlängen im Multiplex in den geraden Zustand stellen kann.

3. Schalter nach Anspruch 1 oder 2, dadurch gekennzeichnet, daß das Filter (FP) durch eine Quelle variabler Spannung zum Zustandsschalten und zur Wellenlängenabstimmung gesteuert ist.

4. Schalter nach einem der vorhergehenden Ansprüche, dadurch gekennzeichnet, daß er mit mehreren identischen Elementen so zusammengeschaltet ist, daß sie eine Matrix mit n Eingängen und n Ausgängen bilden.

5. Verbindungs-Knotenpunkt für ein optisches Kommunikationsnetz mit wellenlängengeteiltem Multiplex, einschließlich einer Koppelmatrix, die durch Schalter nach einem der vorhergehenden Ansprüche implementiert ist.

## Revendications

1. Commutateur optique à deux entrées et deux sorties, comportant:
- un premier circulateur optique à trois voies (C1), ayant une voie d'entrée (P1) et une voie de sortie (P2) constituant respectivement une première entrée et une première sortie du commutateur;
- un deuxième circulateur optique à trois voies (C2), ayant une voie d'entrée (P'1) et une voie de sortie (P'2) constituant respectivement une deuxième entrée et une deuxième sortie du commutateur; et
- un filtre optique passe-bande syntonisable en longueur d'onde (FP), connecté entre une voie d'entrée-sortie (P3) du premier circulateur et une voie d'entrée-sortie (P'3) du deuxième circulateur, et associé à des moyens de syntonisation, par rapport à une longueur d'onde donnée;
caractérisé en ce que ledit filtre (FP) est un filtre à fibre optique à cavité résonnante, et les moyens de syntonisation sont agencés de façon à régler la longueur de la cavité pour varier la syntonisation du filtre et pour le faire commuter entre un premier état, dans lequel le filtre transmet ladite longueur d'onde donnée, et un deuxième état dans lequel il réfléchit ladite longueur d'onde donnée, et vice versa, de manière qu'une porteuse à cette longueur d'onde qui arrive à la voie d'entrée d'un des circulateurs (C1, C2) est transférée à la voie de sortie du même circulateur dans un état droit, ou à la voie de sortie de l'autre circulateur dans un état croisé.

2. Commutateur selon la revendication 1, caractérisé en ce que les moyens pour la commutation de l'état du filtre (FP) sont agencés de façon à disposer le filtre dans l'état croisé pour une longueur d'onde donnée sélectionnable dans un multiplex à division de longueur d'onde présent aux entrées, et dans l'état droit pour toutes les autres longueurs d'onde du multiplex.

3. Commutateur selon la revendication 1 ou 2, caractérisé en ce que ledit filtre (FP) est contrôlé par une source de tension variable, pour la commutation d'état et la syntonisation en longueur d'onde.

4. Commutateur selon l'une quelconque des revendications précédentes, caractérisé en ce qu'il est connecté à plusieurs éléments identiques pour former une matrice à n entrées et n sorties.

5. Noeud de routage pour un réseau optique de communication à division de longueur d'onde, comprenant une matrice de commutation réalisée moyennant des commutateurs selon l'une quelconque des revendications précédentes.
